# EUROPEAN PATENT APPLICATION

(11) **EP 2 816 461 A1**
(43) Date of publication of application: **24.12.2014**
(21) Application number: 13749164.3
(22) Date of filing: 15.02.2013
(51) Int. Cl.: G06F 3/0488, G06F 1/32, G06F 3/0485, H04M 1/00

(54) **SCREEN DISPLAY DEVICE, METHOD FOR CONTROLLING SAME, PROGRAM, AND COMPUTER-READABLE RECORDING MEDIUM**

(30) Priority: 16.02.2012 JP 2012032177
(71) Applicant: Sharp Kabushiki Kaisha, Osaka-shi, Osaka 545-8522 (JP)
(72) Inventor: OHTSUKA, Kiyofumi, Osaka-shi, Osaka 545-8522 (JP); ISHIKAWA, Hirokazu, Osaka-shi, Osaka 545-8522 (JP); HORIUCHI, Kenichi, Osaka-shi, Osaka 545-8522 (JP); ITOH, Seigo, Osaka-shi, Osaka 545-8522 (JP); NAGASAWA, Tadao, Osaka-shi, Osaka 545-8522 (JP)
(74) Representative: Müller - Hoffmann & Partner
(86) International application number: PCT/JP2013/053729
(87) International publication number: WO 2013/122216

(57) **Abstract**

A mobile phone (1) which displays a scrollable screen includes a degraded operation setting section (104). In a case where a scrollable screen is being displayed when an operation input for instructing a scrolling is accepted, the degraded operation setting section (104) inhibits a degraded operation for a predetermined time period and, in a case where a scrollable screen is not displayed, the degraded operation setting section (104) causes the process to be carried out in the degraded state.

## Description

### Technical Field

The present invention relates to a screen display device that displays a scrollable screen, a method for controlling the screen display device, a program, and a computer-readable storage medium.

### Background Art

In recent years, power consumption and an amount of heat during an operation of a CPU (Central Processing Unit), which is provided in an information terminal, are increasing, in accordance with an enhanced performance and an increased number of cores of the CPU. Under the circumstances, various measures for power management have been proposed in order to lower the power consumption and the amount of heat.

For example, an operating system (hereinafter, referred to as "OS") having a power management function has been proposed. Such an OS has functions to (i) carry out a process of changing a frequency and a voltage of the CPU (i.e., dynamic frequency scaling, dynamic voltage scaling) by judging an operating state based on management items such as a workload and a power supply state of the CPU and (ii) appropriately carry out a process (degraded operation) of reducing the number of operation cores with the use of a power gating technique.

However, in a case where such a degraded operation is carried out, the power consumption and the amount of heat can be reduced but the original processing capability of the CPU cannot be sufficiently achieved.

Under the circumstances, in a case where the degraded operation is being carried out at a timing at which a process needs to be carried out in response to a user's operation, a response to the user's operation is sometimes deteriorated. This causes the user to feel that "the operation is slow" or "the response is poor".

For reference, the following description will discuss an example in which a scrollable screen is displayed by an information terminal that includes a display and has a graphical user interface (hereinafter, referred to as "GUI") with which a touch operation can be carried out.

In a case where a list such as a telephone directory, an application list screen, or a map is displayed, not all information can be displayed in one (1) screen, and therefore the information is generally displayed in a scrollable screen. That is, a content displayed on the screen is slid by a touch operation in which a part of the screen is pressed by a finger and the finger is moved while pressing the screen.

In a case where an application is executed in which a scrolling process is carried out in response to a touch operation, a following performance and a response of the screen scrolling with respect to the touch operation are sometimes deteriorated.

The following description will concretely discuss this. In the first place, images to be displayed on the screen need to be generated and displayed fast in the scrolling process, and therefore a workload on the CPU becomes high. Especially, a load becomes highest immediately after the scrolling process is started.

Meanwhile, when the degraded operation of the CPU is carried out, the power consumption and the amount of heat can be suppressed but the processing capability of the CPU is lowered.

Therefore, in a case where the scrolling process is carried out during the degraded operation, the processing capability of the CPU sometimes runs short. This has sometimes caused (i) a phenomenon in which the displayed screen does not scroll (i.e., does not follow the finger) in response to the touch operation for scrolling and (ii) an unsmooth display of a screen in response to a touch operation (i.e., flicking) in which the finger is released after scrolling.

In order to improve the following performance and the response in such a browsing operation method, the following techniques have conventionally been proposed. Patent Literature 1 discloses a technique in which a high clock level is set with respect to a process triggered by a user event so that a response is improved and a processing time is shortened.

Patent Literature 2 discloses a device which controls an operating frequency of a CPU in accordance with contents of an executed process. The device sets a predetermined clock level to the CPU upon receipt of a key input from a user.

### Citation List

### [Patent Literatures]

### [Patent Literature 1]

International Publication WO 2010/097885 (A1) (Publication date: September 2, 2010)

### [Patent Literature 2]

Japanese Patent Application Publication Tokukai No. 2010-39791 A (Publication date: February 18, 2010)

### Summary of Invention

### Technical Problem

The device disclosed in Patent Literature 1 sets a high clock level when a process is triggered by a user event, even in a case where a scrolling process is not carried out. According to the configuration, an excessively high clock level may be set even in a case where a processing load is not so high.

The device disclosed in Patent Literature 2 routinely sets a predetermined clock level to the CPU each time the device accepts a key input from the user, even in a case where no computational load is exerted on the CPU. According to the configuration, the high clock level is being set for a predetermined time period, even though such a high processing capability is required only during a high load state, i.e., at the beginning of a scrolling. From this, an excessive processing capability is maintained, and therefore power consumption cannot be suppressed efficiently.

The present invention is accomplished in view of the problems, and its object is to provide a screen display device and the like which can smoothly carry out a scrolling process with respect to a scrollable screen by efficiently carrying out a degraded operation.

### Solution to Problem

In order to attain the object, a screen display device of the present invention is a screen display device for displaying a scrollable display image which is larger than a display area of a display section, the screen display device including: screen judging means for judging whether or not a screen displayed on the display section is scrollable; operation accepting means for accepting, from a user, an operation input for changing a scroll state of the screen; and state control means for controlling a state of the screen display device, in a case where a scrollable screen is being displayed when the operation input is accepted, the state control means inhibiting, for a predetermined time period, a switching from a first state, in which a process is carried out at a predetermined capability, to a second state in which the process is carried out at a capability which varies depending on workloads, and in a case where a scrollable screen is not displayed, the state control means causing a process to be carried out in the second state.

In order to attain the object, a method for controlling a screen display device is a method for controlling a screen display device for displaying a scrollable display image which is larger than a display area of a display section, the method including the steps of: (a) judging whether or not a screen displayed on the display section is scrollable; (b) accepting, from a user, an operation input for changing a scroll state of the screen; and (c) controlling a state of the screen display device such that, in a case where a scrollable screen is being displayed when the operation input is accepted, a switching from a first state, in which a process is carried out at a predetermined capability, to a second state, in which the process is carried out at a capability that varies depending on workloads, is inhibited for a predetermined time period and, in a case where a scrollable screen is not displayed, a process is carried out in the second state.

### Advantageous Effects of Invention

The screen display device of the present invention is a screen display device for displaying a scrollable display image which is larger than a display area of a display section, the screen display device including: screen judging means for judging whether or not a screen displayed on the display section is scrollable; operation accepting means for accepting, from a user, an operation input for changing a scroll state of the screen; and state control means for controlling a state of the screen display device, in a case where a scrollable screen is being displayed when the operation input is accepted, the state control means inhibiting, for a predetermined time period, a switching from a first state, in which a process is carried out at a predetermined capability, to a second state in which the process is carried out at a capability which varies depending on workloads, and in a case where a scrollable screen is not displayed, the state control means causing a process to be carried out in the second state.

The method for controlling a screen display device is a method for controlling a screen display device for displaying a scrollable display image which is larger than a display area of a display section, the method including the steps of: (a) judging whether or not a screen displayed on the display section is scrollable; (b) accepting, from a user, an operation input for changing a scroll state of the screen; and (c) controlling a state of the screen display device such that, in a case where a scrollable screen is being displayed when the operation input is accepted, a switching from a first state, in which a process is carried out at a predetermined capability, to a second state, in which the process is carried out at a capability that varies depending on workloads, is inhibited for a predetermined time period and, in a case where a scrollable screen is not displayed, a process is carried out in the second state.

The program of the present invention is a program for controlling a screen display device for displaying a scrollable display image which is larger than a display area of a display section, the program causing a computer to carry out a process that comprises the steps of: (a) judging whether or not a screen displayed on the display section is scrollable; (b) accepting, from a user, an operation input for changing a scroll state of the screen; and (c) requesting a control system to control a state of the screen display device, in the step (c), in a case where a scrollable screen is being displayed when the operation input is accepted, the control system being requested to inhibit, for a predetermined time period, a switching from a first state, in which a process is carried out at a predetermined capability, to a second state in which the process is carried out at a capability which varies depending on workloads, and in a case where a scrollable screen is not displayed, the control system being requested to carry out a process in the second state.

According to the configuration, it is possible to carry out a smooth scrolling process with respect to a scrollable screen by efficiently carrying out a degraded operation. This makes it possible to prevent a deterioration in operational feeling for a user.

### Brief Description of Drawings

Fig. 1 is a functional block diagram illustrating an example of a functional configuration of a control section included in a mobile terminal in accordance with an embodiment of the present invention.
Fig. 2 is a view schematically illustrating the mobile terminal. (a) exemplifies an appearance of the mobile terminal. (b) shows a correspondence between a touch panel display section of the mobile terminal and a scrollable display content.
Fig. 3 is a block diagram illustrating an example configuration of the mobile terminal.
Fig. 4 is a flowchart illustrating an example flow of processes carried out in a degraded operation in the mobile terminal.
Fig. 5 is a flowchart illustrating an example flow of processes carried out in a degraded operation in the mobile terminal.
Fig. 6 is a view illustrating a characteristic of a workload in a scrolling process.
Fig. 7 is a graph illustrating a correspondence between a clock level and time in a case where the clock level is constantly set to a high clock level from a start to an end of a touch move.
Fig. 8 is a graph illustrating a correspondence between a clock level and time in a case where the clock level is set to a high clock level until a predetermined time elapses from a start of a touch move and subsequently the clock level is increased or decreased depending on processing loads.
Fig. 9 is a flowchart illustrating an example flow of processes carried out in a degraded operation in the mobile terminal.
Fig. 10 is a flowchart illustrating another example flow of processes carried out in a degraded operation in a mobile terminal 1.

### Description of Embodiments

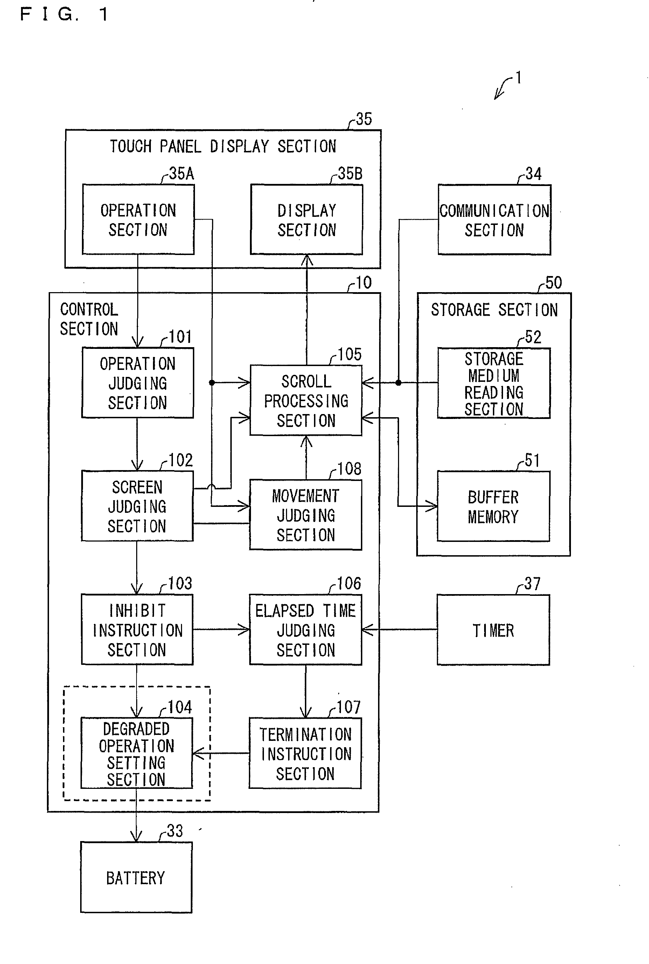

The following description will discuss embodiments of the present invention, with reference to Figs. 1 through 10.

### (Overview of Mobile Terminal)

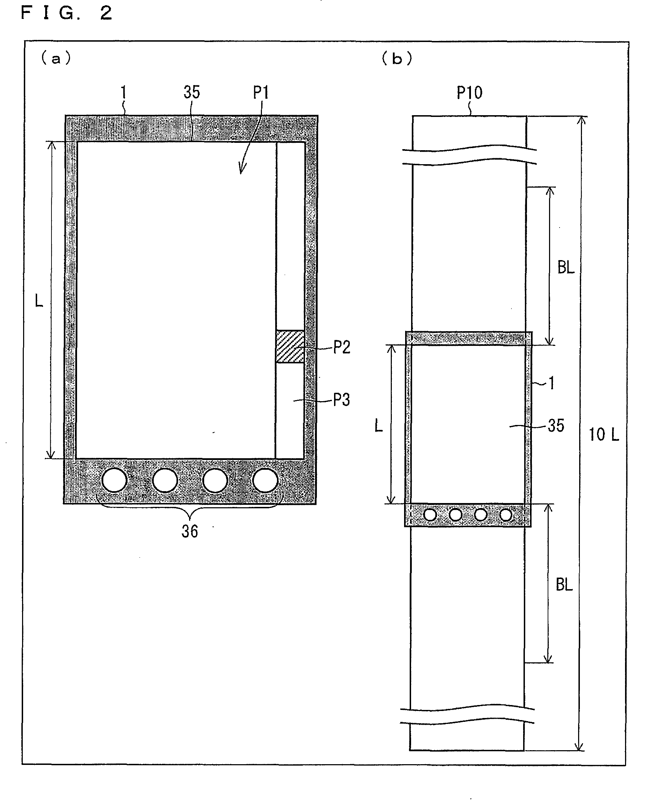

The following description will first discuss an overview of a mobile terminal (screen display device) 1 in accordance with an embodiment of the present invention, with reference to Fig. 2. (a) of Fig. 2 exemplifies an appearance of the mobile terminal 1. (b) of Fig. 2 illustrates a correspondence between a touch panel display section 35 of the mobile terminal 1 and a scrollable display content.

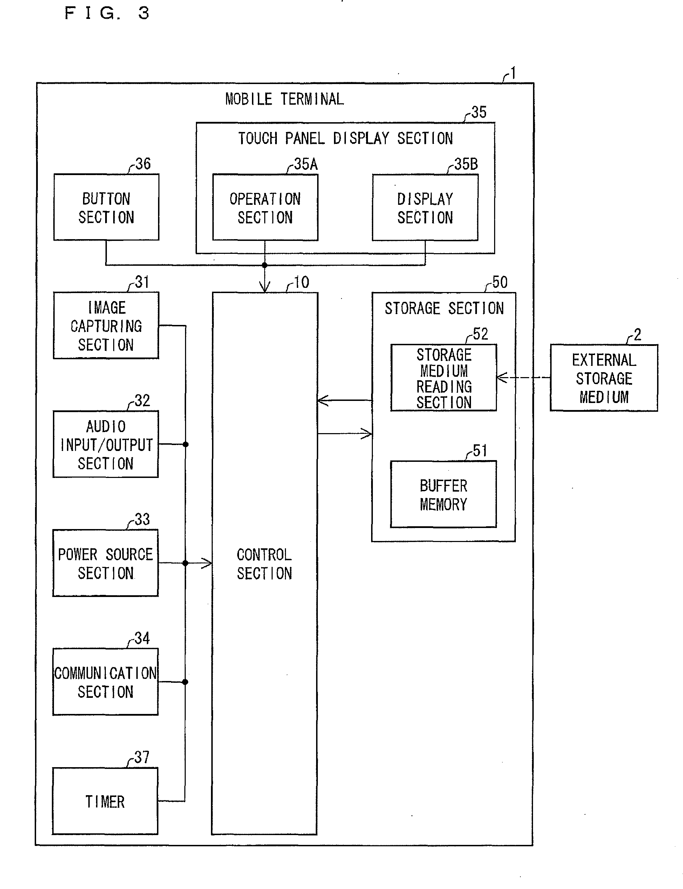

The mobile terminal 1 includes the touch panel display section 35 as a user interface (see (a) of Fig. 2). In the touch panel display section 35 illustrated in (a) of Fig. 2, a part P1 (hereinafter, referred to as "partial content P1") is displayed, which is a part of a display content P10 that is larger than a display area of a display section 35B (described later with reference to Fig. 3).

In the partial content P1, an indicator P2, which indicates a relative location of the partial content P1 in the display content P10, is display in an indicator display area P3 (see (a) of Fig. 2).

(b) of Fig. 2 illustrates an overall image of the display content P10. The display content P10 illustrated in (b) of Fig. 2 is a content that can be scrolled up and down. The display content P10 is, for example, a vertically-long web page that can be viewed by a web browser or a list of items which are arranged in a vertical direction. Such a list encompasses a setting menu list for determining various settings of the mobile terminal 1.

Note, however, that the display content P10 is not limited to the above examples, and can alternatively be (i) a list which can be scrolled right or left or (ii) a map that can be scrolled in any of four directions, i.e., up, down, right, and left. That is, the display content P10 can be vertically-long or horizontally-long with respect to the display section 35B. Alternatively, the display content P10 can be larger in vertical and horizontal lengths than the display area of the display section 35B.

(b) of Fig. 2 illustrates an example in which a vertical length of the display section 35B of the touch panel display section 35 is "L" and a vertical length of the entire display content P10 is "10L".

The display content P10 is displayed in a display section B of the touch panel display section 35 by an application that has a graphical user interface (GUI) which enables a scrollable display. Examples of the application encompass a setting application which displays a setting menu list so that various settings of the mobile terminal 1 can be determined.

While the application is running in the mobile terminal 1, the user can scroll up and down a part (partial content P1), which is to be displayed in the display section 35B, of the display content P10 by carrying out a touch operation with respect to an operation section 35A (described later with reference to Fig. 3) of the touch panel display section 35.

### (Configuration of Mobile Terminal)

The following description will discuss a configuration of the mobile terminal 1 in accordance with an embodiment of the present invention, with reference to Fig. 3. Fig. 3 is a block diagram illustrating an example configuration of the mobile terminal 1. The mobile terminal 1 is exemplified by a multifunctional mobile phone, i.e., a so-called smart phone.

The mobile terminal 1 includes a control section 10, an image capturing section 31, an audio input/output section 32, a power source section 33, a communication section 34, a touch panel display section 35, a button section 36, and a storage section 50 (see Fig. 3).

The control section 10 comprehensively controls various functions of the mobile terminal 1. Details of the control section 10 will be described later.

The image capturing section 31 provides a camera function for photographing a subject so as to obtain an image of the subject. The image capturing section 31 can be realized by, for example, an optical system and an image pickup device (such as a charge coupled device (CCD) or a complementary metal-oxide-semiconductor (CMOS)).

The audio input/output section 32 is a section for inputting or outputting audio. The audio input/output section 32 can be realized by, for example, (i) a microphone for inputting a sound wave into the control section 10 by converting the sound wave into an electric signal and (ii) a speaker for outputting a sound wave by converting an electric signal from the control section 10 into the sound wave. Note that the audio input/output section 32 can have a terminal via which an external pair of headphones or a head set is connected to the mobile terminal 1.

The power source section 33 supplies electric power for operating the sections of the mobile terminal 1. The power source section 33 can be realized by, for example, a secondary battery. Alternatively, electric power can be supplied to the mobile terminal 1 by connecting an external power source to the mobile terminal 1 via a USB (Universal Serial Bus) or an AC adapter.

The communication section 34 is a section for carrying out a communication between the mobile terminal 1 and an external device. The communication section 34 carries out a communication with the external device via, for example, a mobile telephone network or a short-range wireless communication. The communication section 34 can employ a short-range wireless communication such as a wireless LAN (IEEE802.11) or Bluetooth (Registered Trademark).

The touch panel display section 35 has (i) the operation section 35A for accepting a touch operation and (ii) the display section 35B for displaying a screen.

The operation section 35A detects a touch operation (hereinafter, referred to as "touch event") on the display screen of the display section 35B and supplies operation data regarding the touch event to the control section 10. Note that the operation data can contain information such as a location, a direction, an acceleration, and an intensity of the touch operation. Examples of measures with which the operation section 35A detects a touch operation location encompass a matrix switch, a resistive film, a surface acoustic wave, an infrared ray, an electromagnetic induction, an electrostatic capacitor, and a detection of an image of an object (i.e., an optical sensor). The measure for detecting a touch operation location is not limited to such examples, and various kinds of measures can be employed as appropriate. Note that the measure for detecting a touch operation location encompasses a measure for detecting not only a "touch" but also an "approach". Hereinafter, however, a "touch" and an "approach" are not distinguished and a detection target will be described merely as a "touch", for convenience of explanation.

The display section 35B has a display screen for displaying image data. The display section 35B receives image data from the control section 10 and displays an image on the display screen in accordance with the received image data. The display section 35B can be realized by, for example, a liquid crystal display (LCD), a plasma display panel (PDP), and an electroluminescence (EL) display.

The button section 36 is hardware buttons which are provided on a surface of the mobile terminal 1. Concrete examples of the button section 36 encompass a shutter button for operating a camera of the image capturing section 31, a home button for shifting a screen of the display section 35B to a home screen, a volume control button for changing an audio output volume of the audio input/output section 32, and a power source button for turning on or off the power source. The button section 36 (i) generates operation data which corresponds to a user operation and (ii) supplies the operation data to the control section 10.

A timer 37 measures time. The timer section 37 can be realized by, for example, a real time clock (RTC) integrated circuit (IC) for measuring time.

The storage section 50 stores various kinds of data, display contents, and programs. The storage section 30 includes a buffer memory 51 and a storage medium reading section 52. The buffer memory 51 stores a buffer image (which will be described later). The storage medium reading section 52 reads various kinds of data, display contents, and programs stored in an external storage medium 2.

Note that the storage section 50 can store, as a display content, an image obtained by the image capturing section 31.

### (Details of Control Section)

The following description will discuss details of the control section 10, with reference to Fig. 1. Fig. 1 is a functional block diagram illustrating an example of a functional configuration of the control section 10 illustrated in Fig. 3. Note that Fig. 1 illustrates only components to be described below, out of the components illustrated in Fig. 3.

The control section 10 includes an operation judging section (operation accepting means) 101, a screen judging section (screen judging means) 102, an inhibit instruction section (state control means) 103, a degraded operation setting section (state control means) 104, a scroll processing section (image pregenerating means) 105, an elapsed time judging section (state control means) 106, a termination instruction section (state control means) 107, and a movement judging section (movement judging means) 108 (see Fig. 1).

The control section 10 is realized by, for example, a CPU (central processing unit) which executes programs stored in a storage element such as a RAM (random access memory) or a flash memory. The control section 10 can operate in one of (i) a normal state (first state) in which a process is carried out with a normal capability (i.e., a predetermined capability) and (ii) a degraded state (second state) in which a process is carried out with a capability which varies depending on workloads.

The CPU by which the control section 10 is configured operates at a predetermined level of a clock frequency. Hereinafter, the clock frequency level is referred to as "clock level".

Here, the "degraded state" indicates, specifically, a state in which a clock level for the CPU is set in accordance with a workload. For example, in a case where a workload is high, the clock level is set to high in order to heighten the processing capability. Alternatively, in a case where a workload is low, the clock level is set to low in order to suppress power consumption. In the degraded state, for example, the power consumption and the capability are suppressed by partially halting functions of the CPU by which the control section 10 is configured or by changing (i) a frequency (clock level) at which the CPU operates, (ii) the number of operating cores, and/or (iii) a voltage. The "normal state" indicates a state other than the degraded state. The "normal capability" is a capability which is achieved by the control section 10 in the normal state. In the normal state, a predetermined clock level is set for the CPU. For example, in a case where the control section 10 operates in the "normal state", a maximum configurable clock level can be set for the CPU.

Note that any CPU can be employed provided that the CPU can carry out the degraded operation. The CPU can be, for example, a multi-core processor or a single-core processor provided that a degraded operation can be carried out.

The operation judging section 101 detects a touch event on the operation section 35A and judges whether or not the detected touch event is an instruction on scrolling. Specifically, the operation judging section 101 detects a touch event based on operation data supplied from the operation section 35A. The touch event encompasses a tap event, a touch-down event, a touch-move event, and a touch-up event.

The "tap event" indicates that, during a predetermined time period, a touch operation is carried out on the operation section 35A and the touch operation is then terminated while a touch operation location is hardly changed.

The "touch-down event" indicates that a touch operation is carried out on the operation section 35A.

The "touch-move event" indicates that a touch operation is carried out on the operation section 35A and then a touch operation location is moved in a predetermined direction.

The "touch-up event" indicates that a touch operation on the operation section 35A is terminated. Note that an operation of flicking the operation section 35A is referred to as "flick operation" in which a touch-move event is continued for a predetermined time period and then the touch operation is terminated.

The operation judging section 101 judges, based on operation data, whether or not a touch event is a touch-move event. For example, in a case where a screen which can be scrolled up and down is displayed, the operation judging section 101 detects a move event in the up-and-down direction as an event of scrolling instruction. Moreover, the operation judging section 101 judges, based on operation data, whether or not a touch event is a touch-up event.

The screen judging section 102 judges a state of a display screen displayed on the display section 35B. Specifically, the screen judging section 102 judges whether or not the display screen is scrollable by confirming whether or not the display content displayed on the display section 35B is larger than the display area of the display section 35B. Moreover, the screen judging section 102 judges whether or not a display screen is in a still state (i.e., not being scrolled).

The inhibit instruction section 103 instructs, based on a judgment result obtained by the screen judging section 102, the degraded operation setting section 104 to inhibit the degraded operation.

The degraded operation setting section 104 sets an operating state of the control section 10 in accordance with an instruction from the inhibit instruction section 103 or from the degraded operation setting section 104.

Moreover, the degraded operation setting section 104 sets the operating state to the normal state in accordance with an instruction from the inhibit instruction section 103. Specifically, in a case where the control section 10 is operating in the degraded state, the degraded operation setting section 104 inhibits the degraded operation in accordance with the instruction from the inhibit instruction section 103 so as to change the operating state to the normal state.

The degraded operation setting section 104 sets the operating state of the control section 10 to the degraded state in accordance with an instruction from the termination instruction section 107. Specifically, in a case where the degraded operation is inhibited, i.e., the control section 10 is operating in the normal state, the degraded operation setting section 104 terminates the inhibition of the degraded operation in accordance with the instruction from the termination instruction section 107 so as to change the operating state to the degraded state.

Note that, in order to simplify the explanation, the following description will discuss a configuration in which the degraded operation setting section 104 carries out the degraded operation by changing a clock level. Note, however, that the configuration is merely an example for the explanation, and the degraded operation setting section 104 is not limited to such a configuration. That is, it is possible to employ a configuration in which, for example, the degraded operation setting section 104 carries out a degraded operation by changing the number of operating cores.

The scroll processing section 105 prepares images of a display content which are used in a scrolling display. The scroll processing section 105 prepares an image which continues to a currently displayed image and is to be displayed on the display section 35B after a current screen of the display section 35B is scrolled. Such a function of the scroll processing section 105 is referred to also as a buffering function. Hereinafter, an image which is to be displayed after scrolling and is prepared by the scroll processing section 105 in advance of scrolling, is referred to as "buffer image".

The scroll processing section 105 writes a buffer image into the buffer memory 51 and creates a display image by reading out the buffer image from the buffer memory 51 in accordance with scrolling.

The following description will discuss, with reference to Fig. 2, a buffer image which is prepared by the scroll processing section 105. The scroll processing section 105 can prepare, for example, buffer images each having a length BL as illustrated in (b) of Fig. 2. In the example illustrated in (b) of Fig. 2, the length BL is equal to the length L. That is, in the example illustrated in (b) of Fig. 2, the scroll processing section 105 prepares, as buffer images, two images which correspond to respective upper and lower screens with respect to the partial content P1 which is currently displayed on the display section 35B.

The scroll processing section 105 prepares a buffer image based, for example, on a display content stored in the storage section 50, on a display content which can be obtained via the communication section 34 and the network, or on a display content which is read out from the external storage medium 2 via the storage medium reading section 52.

Moreover, the scroll processing section 105 adjusts a scrolling speed depending on touch events. The scroll processing section 105 adjusts a scrolling speed in accordance with, for example, an acceleration of a touch operation or a distance by which a touch operation location has moved during a predetermined time period.

The scroll processing section 105 carries out a scrolling process in which a screen follows a touch operation location in a touch-move event. Moreover, in response to a flick operation (touch-up event), the scroll processing section 105 carries out an inertial scrolling process in which a scrolling starts at a predetermined speed and then the scrolling speed is gradually reduced.

The elapsed time judging section 106 judges whether or not a predetermined time period has elapsed from when the degraded operation is inhibited. Specifically, the elapsed time judging section 106 first measures an elapsed time from when the degraded operation is inhibited to the current time based on a time measured by the timer 37. Then, the elapsed time judging section 106 judges, based on the measured elapsed time, whether or not a predetermined time period has elapsed from when the degraded operation is inhibited.

The termination instruction section 107 instructs the degraded operation setting section 104 to terminate the inhibition of the degraded operation in accordance with a judgment result obtained by the elapsed time judging section 106.

The movement judging section 108 judges a moving state of a touch operation on the operation section 35A. Specifically, the movement judging section 108 judges, based on operation data, whether or not a touch operation location has been moved by a predetermined distance during a predetermined time period. The movement judging section 108 can obtain the predetermined time period with reference to a time measured by the timer 37. The movement judging section 108 judges whether or not a current touch operation location is an edge of the screen.

Note that each of the sections of the control section 10 can be realized as a function of an OS or as a function of an application.

As above described, the mobile phone 1 for displaying a scrollable display image, which is larger than a display area of the display section 35B, includes: the screen judging section 102 for judging whether or not a screen displayed on the display section 35B is scrollable; the operation judging section 101 for accepting, from a user, an operation input for changing a scroll state of the screen; and the degraded operation setting section 104 for controlling a state of the mobile phone 1, in a case where a scrollable screen is being displayed when the operation input is accepted, the degraded operation setting section 104 inhibiting, for a predetermined time period, a switching from the "normal state" to the "degraded state", and in a case where a scrollable screen is not displayed, the degraded operation setting section 104 causes a process to be carried out in the degraded state.

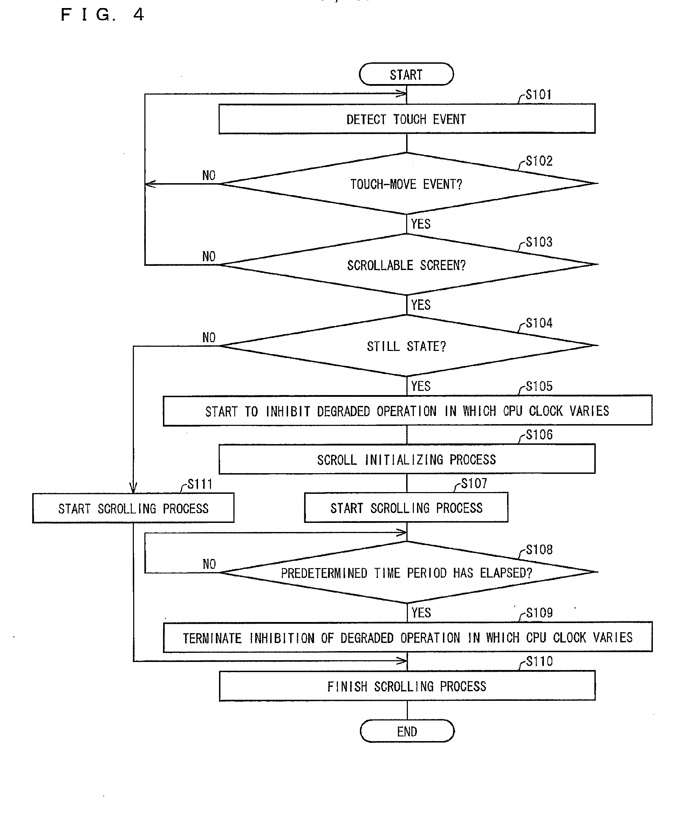

The following description will discuss a concrete flow of processes carried out by the above described configuration, with reference to Figs. 4 through 10.

### (Flow of Processes)

### (1) Flow of processes carried out in degraded operation when touch-move event is detected

The following description will discuss, with reference to Fig. 4, a flow of processes carried out in the degraded operation when a touch-move event is detected. Fig. 4 is a flowchart illustrating an example flow of processes carried out in the degraded operation in the mobile terminal 1.

As illustrated in Fig. 4, when a process is started, the operation judging section 101 first detects a touch event (S101) and judges whether or not the detected touch event is a touch-move event (S102).

In a case where the touch event is not a touch-move event (NO in S102), the operation judging section 101 continues to wait for a touch event (return to S101).

On the other hand, in a case where the touch event is a touch-move event (YES in S102), the screen judging section 102 judges whether or not a display screen is scrollable (S103). Here, the screen judging section 102 can determine that the display screen is not scrollable in a case where a partial content, which is displayed on the display section 35B, corresponds to an end part of the display content. For example, in a case where a list which can be scrolled up and down is displayed and the display screen corresponds to an upper end or a lower end of the list, the screen judging section 102 can determine that the display screen is not scrollable.

In a case where the display screen is not scrollable (NO in S103), the process returns to the beginning (i.e., returns to S101). In this case, the degraded operation setting section 104 can set the mobile terminal 1 to operate in the "degraded state".

On the other hand, in a case where the display screen is scrollable (YES in S103), the screen judging section 102 judges whether or not the display screen is in a still state (S104).

In a case where the display screen is being scrolled and is not in the still state (NO in S104), the scrolling process is continued (S111). When the scrolling process is finished (S110), the process ends.

On the other hand, in a case where the display screen is in the still state (YES in S104), the following process is carried out. First, the inhibit instruction section 103 instructs the degraded operation setting section 104 to inhibit the degraded operation in which the clock level varies. This causes the degraded operation to be inhibited and therefore the control section 10 starts to operate in the normal state (S105). Note that, in this case, it is preferable that a predetermined level or higher clock level is set or a maximum clock level is set.

Next, the scroll processing section 105 carries out an initialization process for initializing the scrolling (S106). In the initialization process, the scroll processing section 105 prepares a buffer image of the display content which buffer image is used in the scrolling display.

Subsequently, the scroll processing section 105 starts a scrolling process of scrolling the display screen with reference to the buffer memory 51 (S107).

Here, the elapsed time judging section 106 judges whether or not a predetermined time period has elapsed from when the degraded operation is inhibited (S108). In a case where the predetermined time period has not elapsed, the scrolling process is continued (NO in S108). The predetermined time period corresponds to, for example, one (1) operation cycle of a clock changing process. More specifically, the predetermined time period can be set to 20 milliseconds. Note that the clock changing process is carried out in an OS layer in response to a request from an application.

On the other hand, in a case where the predetermined time period has elapsed (YES in S108), the termination instruction section 197 instructs the degraded operation setting section 104 to terminate the inhibition of the degraded operation (S109).

Then, when the scrolling process is finished (S110), the process ends.

In S102, a touch-move event is detected. Note, however, that a subject to be detected is not limited to this and a flick operation (touch-up event) can be detected. Moreover, the scrolling process can be an inertial scrolling process in accordance with a flick operation.

### [Effects]

According to the configuration, the degraded operation is inhibited for a predetermined time period when an instruction operation for scrolling has been detected while a scrollable screen is displayed on the display section 35B. This makes it possible to secure a CPU capability enough to finish preparing buffer images during the predetermined time period.

For example, in the process of preparing a buffer image, the scroll processing section 105 obtains a partial content, which is to be displayed after scrolling, out of a display content, and the scroll processing section 105 generates a display image based on the obtained partial content. Moreover, the scroll processing section 105 obtains a partial content via the communication section 34 and the network or obtains a partial content from the external storage medium 2 via the storage medium reading section 52. These processes require a relatively high CPU capability.

According to the configuration, therefore, it is possible to secure a CPU capability enough for the scroll processing section 105 to carry out such a high load process.

In a case where the CPU capability is heightened for a predetermined time period after the scrolling process is started, it is possible to reduce "slowness" and "unsmoothness" at the beginning of the scrolling.

This allows a smooth scrolling process on a scrollable screen by efficiently carrying out the degraded operation, and it is therefore possible to prevent a deterioration in operational feeling for a user.

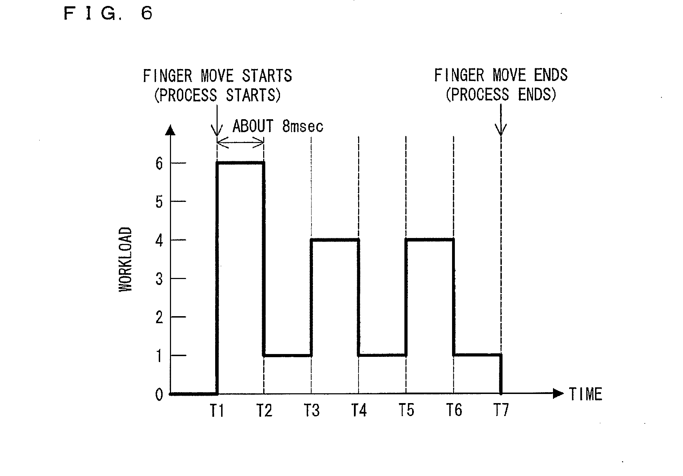

The following description will concretely discuss the degraded operation with reference to Figs. 6 through 8. First, a characteristic of a workload in a scrolling process is described with reference to Fig. 6. Fig. 6 illustrates an example correspondence between workload and time in a case where a touch-move event occurs at a time point T1 (which is indicated by "FINGER MOVE STARTS" in Fig., 6) and then the touch-move event ends at a time point T7 (which is indicated by "FINGER MOVE ENDS" in Fig. 6).

The graph illustrated in Fig. 6 indicates a case where a frame rate of the display section 35B is 60 fps (frame/ second). In Fig. 6, one (1) division on a time axis is approximately 8 milliseconds (msec), and two divisions (e.g., between T1 and T3) correspond to one (1) frame. That is, two divisions are approximately 16 milliseconds (= 1 / 60 second).

In Fig. 6, it is assumed that an interval between T1 and T3 is a first frame, an interval between T3 and T5 is a second frame, and an interval between T5 and T7 is a third frame.

For example, in the first frame, an interval between T1 and T2 is high in workload than an interval between T2 and T3 because a processing load in a first half of a frame becomes high due to a preparation of a buffer image and the like. That is, Fig. 6 illustrates an example in which a preparation of a buffer image is completed in the interval between T1 and T2.

The workload in the interval between T1 and T3 is higher than those of the interval between T3 and T5 and of the interval between T5 and T7 because the workload becomes higher immediately after the process starts than the subsequent intervals.

In the graph illustrated in Fig. 6, a peak of the workload appears for each one (1) frame period (i.e., approximately 16 milliseconds). As such, the workload in the scrolling process becomes highest at the beginning of the scrolling and then becomes lower when a process for one (1) frame is completed. Further, subsequent to this, a predetermined workload periodically occurs for each one (1) frame period.

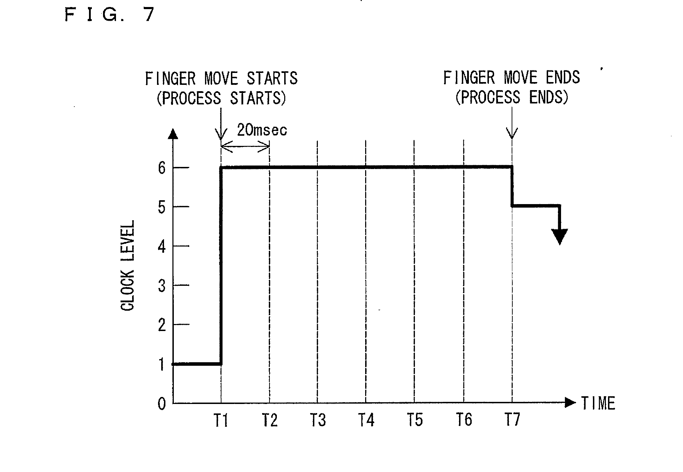

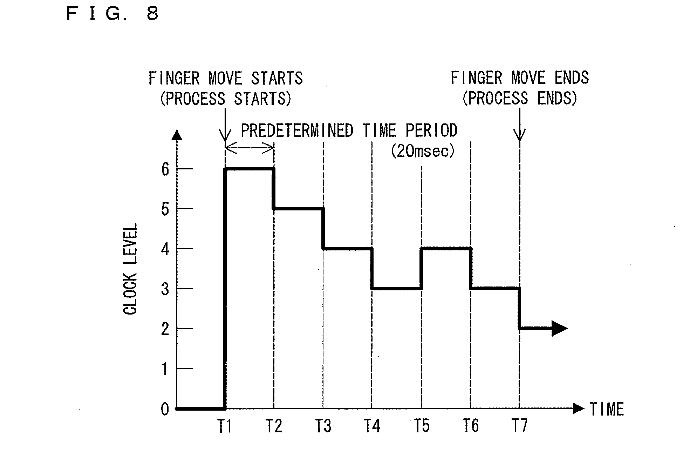

The following description will discuss, with reference to Figs. 7 and 8, a comparison between (A) a case where a clock level is constantly set to a high clock level from a start to an end of a touch move for scrolling and (B) a case where a clock level is set to a high clock level for a predetermined time period from a start of a touch move for scrolling and subsequently the clock level is increased or decreased depending on processing loads.

First, the following describes, with reference to Fig. 7, the case (A) in which a clock level is constantly set to a high clock level from a start to an end of a touch move.

Fig. 7 is a graph illustrating a correspondence between a clock level and time in a case where the clock level is constantly set to a high clock level from a start to an end of a touch move. Note that one (1) division on a time axis in Fig. 7 is approximately 20 milliseconds (msec) and corresponds to an operation cycle of a clock changing process.

In Fig. 7, the clock level is constantly set to "6" from a start to an end of a touch move.

In Fig. 7, the control section 50 (CPU) carries out the degraded operation in an interval between 0 and T1.

At the time point T1 at which the touch move starts (i.e., the process starts), the clock level is raised to "6", and the setting of the clock level "6" is canceled at the time point T7 at which the touch move ends (i.e., the process ends).

Next, the following describes the case (B) where the clock level is set to a high clock level for a predetermined time period from a start of a touch move and subsequently the clock level is increased or decreased depending on a processing load.

Fig. 8 is a graph illustrating a correspondence between a clock level and time in a case where the clock level is set to a high clock level until a predetermined time elapses from a start of a touch move and subsequently the clock level is increased or decreased depending on a processing load. Note that one (1) division on a time axis in Fig. 8 is approximately 20 milliseconds (msec), as with the graph illustrated in Fig. 7. In the example illustrated in Fig. 8, it is assumed that a display screen is scrollable. If the display screen is not scrollable, the clock level can be set depending on a workload from the time point T1 at which the touch move starts.

In Fig. 8, the control section 50 (CPU) carries out the degraded operation in an interval between 0 and T1.

In Fig. 8, the clock level is set to "6" until the predetermined time period elapses from when the touch move starts (i.e., the process starts). That is, the degraded operation is inhibited during a predetermined time period between the time point T1 at which the touch move starts (i.e., the process starts) and the time point T2.

At this time, the clock level is preferably set to a maximum clock level. Note, however, that the clock level is not limited this and can be set to a predetermined clock level which is equal to or higher than a clock level that is set depending on workloads.

As illustrated in Fig. 8, the predetermined time period is 20 milliseconds, i.e., is equal to the operation cycle of the CPU. The predetermined time period can be determined based on a time period which (i) is required for a process carried out immediately after the touch move starts and (ii) has been measured in advance. Further, in a case where it turns out that the process carried out immediately after the touch move starts is completed within one (1) operation cycle of the clock changing process, the predetermined time period can be set to be equal to one (1) operation cycle of the CPU as illustrated in Fig. 8.

At and after the time point T2, the inhibition of the degraded operation is terminated and the clock level is set depending on workloads.

As illustrated in Fig. 8, the clock level is set to "5", "4", "3", "4", and "3" in respective intervals T2-T3, T3-T4, T4-T5, T5-T6, and T6-T7. The clock level is not regularly decreased during the time period between the start and the end of the touch move, and is increased at a certain timing (see Fig. 8). This is because a processing load becomes higher due to a process such as preparation of a buffer image immediately after a frame is switched, and the clock level is raised at such a timing.

When the clock level is high, the processing capability and the power consumption are high. At and after the time point T2, the clock level in Fig. 7 is higher than that of Fig. 8, and accordingly a total power consumption in the case of Fig. 7 is higher than that in the case of Fig. 8. Moreover, in the case of Fig. 8, the clock level can be set to be higher during the predetermined time period (i) which is immediately after the touch move starts and (ii) in which the processing load is high.

Therefore, the case illustrated in Fig. 8 can reduce the power consumption as compared with the case illustrated in Fig. 7.

Meanwhile, when the display screen is not scrollable, the power consumption immediately after the touch move starts can be suppressed by setting the clock level depending on the workload from the time point T1 at which the touch move starts. This is because, as long as the scrolling process is not carried out, the processing load is assumed not to be heightened so much, and a user would less likely to experience an inconvenience such as "slowness" in scrolling.

This configuration corresponds to the case (B) where the clock level is set to a high clock level for a predetermined time period from a start of a touch move and subsequently the clock level is increased or decreased depending on a processing load.

Therefore, according to the configuration, it is possible to (i) lower the power consumption while inhibiting a "slowness" immediately after a touch move of a scrolling process starts and also (ii) lower the power consumption when the scrolling process is not carried out.

### (2) Flow of processes carried out in degraded operation when touch-up event is detected

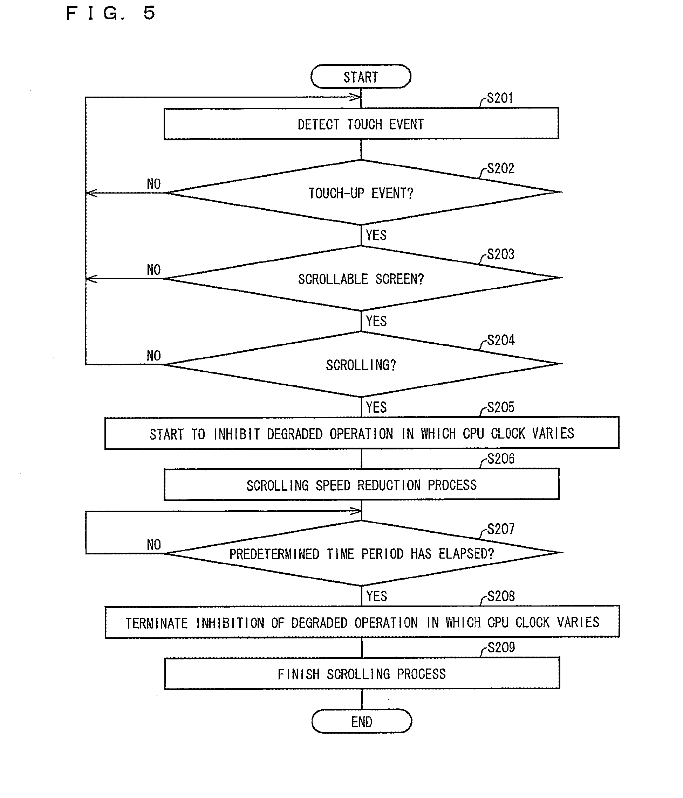

The following description will discuss, with reference to Fig. 5, a flow of processes carried out in the degraded operation when a touch-up event is detected. Fig. 5 is a flowchart illustrating an example flow of processes carried out in the degraded operation in the mobile terminal 1.

As illustrated in Fig. 5, when a process is started, the operation judging section 101 first detects a touch event (S201). Then, the operation judging section 101 judges whether or not the detected touch event is a touch-up event (S202), and the screen judging section 102 judges whether or not the display screen is scrollable (S203) and whether or not the display screen is being scrolled (S204).

Here, in any of a case where the touch event is not a touch-up event (NO in S202), a case where the display screen is not scrollable (NO in S203), and a case where the display screen is not being scrolled (NO in S204), the operation judging section 101 waits for a touch event (i.e., the process returns to S201). In this case, the degraded operation setting section 104 can set the mobile terminal 1 to operate in the "degraded state".

On the other hand, in a case where the touch event is a touch-up event (YES in S202), the display screen is scrollable (YES in S203), and the display screen is being scrolled (YES in S204), the following process is carried out.

First, the inhibit instruction section 103 instructs the degraded operation setting section 104 to inhibit the degraded operation in which the clock level varies. This causes the degraded operation to be inhibited and therefore the control section 10 starts to operate in the normal state (S205).

Then, the scroll processing section 105 carries out a speed reduction process for reducing a speed of the scrolling (S206). The scrolling speed reduction process is, for example, an inertial scrolling process which is carried out in response to a flick operation by the user. In the speed reduction process on the scrolling, a moving distance by the scrolling can be quadratically reduced as time elapses.

Subsequent steps S207 through S209 are similar to the respective steps S108 through S110 of Fig. 4, and descriptions for the steps S207 through S209 are omitted here.

### [Effects]

According to the configuration, it is possible to set a high clock level when the scrolling speed reduction process is started which causes a relatively high load.

This makes it possible to avoid "slowness" or the like when the scrolling speed reduction process is started.

### (3) Flow #1 of processes in degraded operation when touch-up expectation is carried out

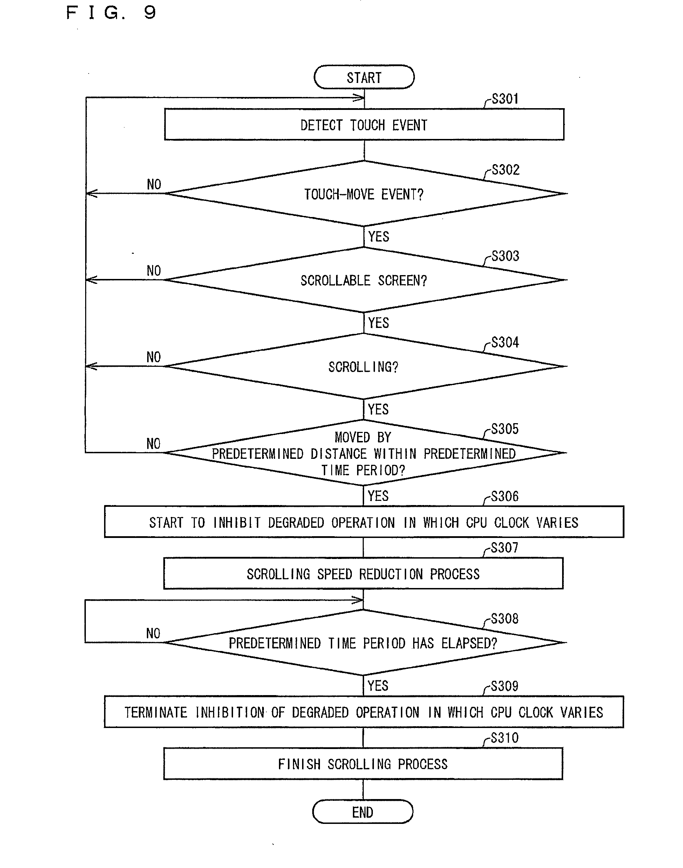

Next, the following description will discuss, with reference to Fig. 9, a flow of processes in the degraded operation when a touch-up expectation is carried out. Fig. 9 is a flowchart illustrating an example flow of processes carried out in a degraded operation in the mobile terminal 1.

As illustrated in Fig. 9, when a process is started, the operation judging section 101 first detects a touch event (S301).

Then, in steps S301 through S305, the operation judging section 101, the screen judging section 102, and the movement judging section 108 carry out the following judgments. That is, the operation judging section 101 judges whether or not the touch event is a touch-move event (S302). Moreover, the screen judging section 102 judges whether or not a display screen is scrollable (S303) and whether or not the display screen is being scrolled (S304). Furthermore, the movement judging section 108 judges whether or not a touch operation location is moved by a predetermined distance within a predetermined time period (S305). Here, in a case where the display screen is not scrollable, the mobile terminal 1 can operate in the "degraded state".

If the steps S301 through S305 are all "YES", the degraded operation in which the clock level varies is inhibited in steps S306 through S310, and a scrolling speed reduction process is carried out. The steps S306 through S310 are similar to the respective steps S205 through S209 of Fig. 5, and descriptions for the steps S306 through S310 are omitted here.

In a case where the touch operation location is moved by the predetermined distance within the predetermined time period, it is expected that the user will carry out a flick operation.

The predetermined time period and the predetermined distance can be determined in accordance with a screen size of the display section 35B. In a case where the touch operation location is moved for a predetermined time period and then reaches an edge part of the display section 35B, it is expected that the user will carry out a flick operation. As such, the predetermined distance can be set to an expectable time required for the touch operation location to reach the edge part of the display section 35B and an expectable moving distance by which the touch operation location moves to reach the edge part of the display section 35B.

The predetermined distance can be, for example, one third of a vertical length or a horizontal length of the screen. The predetermined time period can be, for example, 100 milliseconds.

### [Effects]

According to the configuration, the degraded operation is inhibited, for a predetermined time period, from a timing when it is expected that the user will carry out a flick operation in a scrolling process.

From this, the control section 10 is operated in the normal state when a scrolling process is carried out in response to a flick operation, and this makes it possible to heighten the clock level and the like in advance.

As a result, it is possible to heighten the CPU capability in advance of the timing when the scrolling process is carried out in response to the flick operation, i.e., when the scrolling speed reduction process is started. This allows a reduction in "slowness" and the like when the scrolling speed reduction process is started.

### (4) Flow #2 of processes in degraded operation when touch-up expectation is carried out

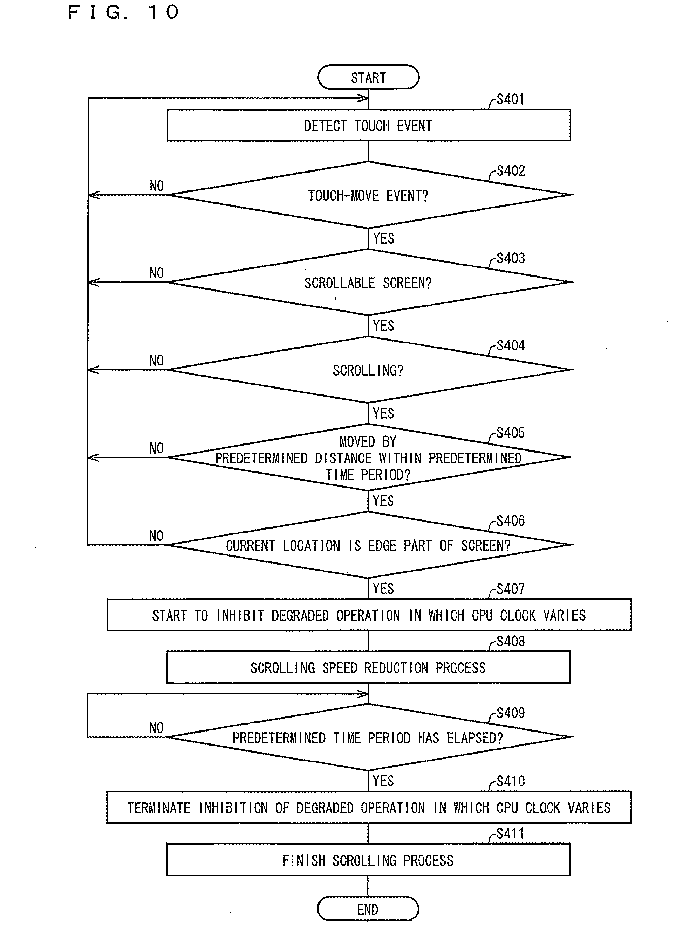

Next, the following description will discuss, with reference to Fig. 10, a flow of processes in the degraded operation when a touch-up expectation is carried out. Fig. 10 is a flowchart illustrating an example flow of processes carried out in a degraded operation in the mobile terminal 1.

As illustrated in Fig. 10, when a process is started, the operation judging section 101 first detects a touch event (S401).

Then, in steps S401 through S406, the operation judging section 101, the screen judging section 102, and the movement judging section 108 carry out the following judgments. That is, the operation judging section 101 judges whether or not the touch event is a touch-move event (S402). Moreover, the screen judging section 102 judges whether or not a display screen is scrollable (S403) and whether or not the display screen is being scrolled (S404). Furthermore, the movement judging section 108 judges whether or not a touch operation location is moved by a predetermined distance within a predetermined time period from a touch-down operation (S405) and whether or not a current touch operation location is at an edge of the screen (S406). Here, in a case where the display screen is not scrollable, the mobile terminal 1 can operate in the "degraded state".

If the steps S401 through S406 are all "YES", the degraded operation in which the clock level varies is inhibited in subsequent steps S407 through S411, and a scrolling speed reduction process is carried out. The steps S407 through S411 are similar to the respective steps S205 through S209 of Fig. 5, and descriptions for the steps S407 through S411 are omitted here.

### [Effects]

According to the configuration, whether or not the current touch operation location is at the edge of the screen is judged, in addition to the processes above described in (3). This makes it possible to more accurately judge whether or not the user will carry out a flick operation. Note that, when judging whether or not the current touch operation location is at the edge of the screen, the edge of the screen can be defined as an area lying by 10 pixels from a periphery of the screen.

### (Example configuration of OS function and application function)

The above descriptions have not particularly discussed whether the sections of the control section 10 are realized by OS functions or by application functions.

The following description will discuss an example configuration of OS functions and application functions with reference to Fig. 1.

It is possible to employ a configuration as illustrated in Fig. 1 in which the degraded operation setting section 104 (which is indicated by a dotted box in Fig. 1) is realized as an OS function and the other sections are realized as application functions.

In the description below, it is assumed that the degraded operation setting section 104 is realized as the OS function. The OS function can be expressed as a function to control switching between the "normal state" and the "degraded state". Moreover, it is assumed that the operation judging section 101, the screen judging section 102, the inhibit instruction section 103, the scroll processing section 105, the elapsed time judging section 106, the termination instruction section 107, and the movement judging section 108 are realized as the application functions.

The following description will further discuss an operation flow in such a configuration, with reference to the flowchart of Fig. 4.

When the process starts, the steps S101 through S104 are carried out by the application functions.

In a case where conditions to inhibit the degraded operation at the beginning of a scrolling process are met (YES in S104), the application function (i.e., the inhibit instruction section 103) requests the OS function (i.e., the degraded operation setting section 104) to inhibit the degraded operation. Upon receipt of the request for inhibiting the degraded operation, the OS function inhibits the degraded operation (S105).

Subsequently, the steps S106 through S108 are carried out by the application functions. In a case where the conditions to terminate the inhibition of the degraded operation are met (YES in S108), the application function (i.e., the termination instruction section 197) requests the OS function (i.e., the degraded operation setting section 104) to terminate the inhibition of the degraded operation. Upon receipt of the request for terminating the inhibition of the degraded operation, the OS function terminates the inhibition of the degraded operation (S109). Then, the OS function sets a clock level in accordance with a workload, and the application function carries out a scrolling process. After that, when the scrolling process is finished, the process ends (S110).

Here, in general, although the OS function detects whether or not a touch event occurs, the OS function hardly detects, when such an event occurs, whether or not a display screen is scrollable. Furthermore, a kind of a display screen to be displayed is mostly managed by the application function.

According to the configuration, the application function, which has detected an occurrence of a scrolling process that requires a high workload, requests the OS function to inhibit the degraded operation before the scrolling process is carried out.

In response to the request, the OS function inhibits the degraded operation. This allows the application function to carry out the scrolling process with a sufficient CPU capability.

Moreover, according to the configuration, it is possible to notify, from the application function in advance, the OS function of the inhibition of the degraded operation.

With the configuration, the clock level can be raised at an earlier time point, as compared with a configuration in which a degrading function is executed by an OS function in response to a scrolling process which has been carried out by an application function in response to a touch event.

As such, it is possible to raise the clock level in advance of a scrolling process carried out by the application function. This brings about an effect of smoothing a beginning of a scrolling process.

Note that the application function can request the OS function to carry out the degraded operation in a case where a display screen is not scrollable.

### (Configuration by Hardware and Software)

Each block of the control section 10 of the mobile terminal 1 can be configured by hardware with the use of a logic circuit formed on an integrated circuit (IC chip) or by software with the use of CPU (Central Processing Unit).

In the case where each block of the control section 10 is configured by software, the mobile terminal 1 includes a CPU, a ROM (Read Only Memory), a RAM (Random Access Memory), and a storage device (storage medium) such as a memory. The CPU executes instructions of programs for realizing the functions. In the ROM, the programs are stored. Into the RAM, the programs are loaded. In the memory, the programs and various data are stored. The objective of the present invention can also be achieved, by (i) supplying a storage medium, in which program codes (executable programs, intermediate code programs, source programs) of programs for controlling the mobile terminal 1 configured by software for realizing the functions, are stored so that a computer can read them, to the mobile terminal 1, and then (ii) causing the computer (or CPU or MPU) to read and execute the program codes stored in the storage medium.

The storage medium can be, for example, a tape such as a magnetic tape or a cassette tape; a disk including (i) a magnetic disk such as a floppy (Registered Trademark) disk or a hard disk and (ii) an optical disk such as CD-ROM (Compact Disc Read-Only Memory), MO disk (Magneto-Optical disc), MD (Mini Disc), DVD (Digital Versatile Disc), CD-R (CD Recordable), or Blu-ray Disc (Registered Trademark); a card such as an IC card (memory card) or an optical card; a semiconductor memory such as a mask ROM, EPROM (Erasable Programmable Read-Only Memory), EEPROM (Registered Trademark) (Electrically Erasable and Programmable Read-Only Memory), or flash ROM; or a logic circuit such as PLD (Programmable Logic Device) or FPGA (Field Programmable Gate Array).

Alternatively, the mobile terminal 1 can be arranged to be connectable to a communications network so that the program codes are delivered over the communications network. The communications network is not limited to a specific one, provided that the program codes can be transferred via the communications network. The communications network is, for example, the Internet, an intranet, extranet, LAN (Local Area Network), ISDN (Integrated Services Digital Network), VAN (Value-Added Network), CATV (Community Antenna television/Cable Television) communications network, virtual private network, telephone line network, mobile communications network, or satellite communications network. The transfer medium which constitutes the communications network is not limited to a specific configuration or a specific type, provided that the program codes can be transferred via the transfer medium. The transfer medium can be, for example, wired line such as IEEE (Institute of Electrical and Electronic Engineers) 1394, USB, electric power line, cable TV line, telephone line, or ADSL (Asymmetric Digital Subscriber Line); or wireless such as infrared radiation (IrDA (Infrared Data Association), remote control), Bluetooth (Registered Trademark), IEEE802.11 wireless, HDR (High Data Rate), NFC (Near Field Communication), DLNA (Digital Living Network Alliance), mobile telephone network, satellite line, or terrestrial digital network. Note that, the present invention can be realized by a computer data signal (i) which is realized by electronic transmission of the program code and (ii) which is embedded in a carrier wave.

### (Additional Remarks)

The present invention can be expressed as follows:

The screen display device of the present invention is a screen display device for displaying a scrollable display image which is larger than a display area of a display section, the screen display device including: screen judging means for judging whether or not a screen displayed on the display section is scrollable; operation accepting means for accepting, from a user, an operation input for changing a scroll state of the screen; and state control means for controlling a state of the screen display device, in a case where a scrollable screen is being displayed when the operation input is accepted, the state control means inhibiting, for a predetermined time period, a switching from a first state, in which a process is carried out at a predetermined capability, to a second state in which the process is carried out at a capability which varies depending on workloads, and in a case where a scrollable screen is not displayed, the state control means causing a process to be carried out in the second state.

The method of the present invention for controlling a screen display device is a method for controlling a screen display device for displaying a scrollable display image which is larger than a display area of a display section, the method including the steps of: (a) judging whether or not a screen displayed on the display section is scrollable; (b) accepting, from a user, an operation input for changing a scroll state of the screen; and (c) controlling a state of the screen display device such that, in a case where a scrollable screen is being displayed when the operation input is accepted, a switching from a first state, in which a process is carried out at a predetermined capability, to a second state, in which the process is carried out at a capability that varies depending on workloads, is inhibited for a predetermined time period and, in a case where a scrollable screen is not displayed, a process is carried out in the second state.

According to the configuration, a scrollable display image, which is larger than the display area of the display section, is displayed in the display section.

The scrollable display image is an image which is larger than the display area of the display section and can be partially displayed in the display section while being moved up, down, right, or left. The scrollable display image is image data which has been generated to be displayed on the screen of the display section. The display image can be, for example, a vertically-long web page that can be viewed by a web browser, a list of items that are arranged in an up-and-down direction or in a right-and-left direction, or (ii) a map that can be scrolled in any of four directions, i.e., up, down, right, and left.

Note that the display of the scrollable display image encompasses the processes below.

Moreover, examples of an operation input for changing a scroll state of the screen encompass (i) an operation input for instruction on starting a scroll of a still screen or on starting an inertial scroll and (ii) an operation input for instruction on inertial scrolling of a screen which is being scrolled.

According to the configuration, in a case where a scrollable screen is displayed and a scroll state of the screen is changed in response to the operation input, it is possible to inhibit, for the predetermined time period, the switching from the first state, in which a process is carried out at a predetermined capability, to the second state in which the process is carried out at a capability which varies depending on workloads.

Here, "the process is carried out at a capability which varies depending on workloads" in the second state means that, for example, the process is carried out by a CPU or the like in a so-called "degraded state". In the "degraded state", for example, the power consumption and the capability are suppressed by partially halting functions of the CPU or by changing (i) a frequency (clock level) at which the CPU operates, (ii) the number of operating cores, and/or (iii) a voltage. In a case where, for example, a workload is high, a clock level can be set to high in order to enhance the processing capability. While the CPU executes a large amount of processes, the clock level can be maintained at the high state. Alternatively, for example, in a case where a workload is low, a clock level can be set to low in order to reduce power consumption.

The "first state" indicates the "normal state" which is not the degraded state. The "normal capability" is a capability which is achieved by the CPU in the normal state. In the "normal state", a predetermined clock level is set, unlike in the "degraded state".

With the configuration, in a case where a process is expected which requires a change of a scroll state of the screen, i.e., a high workload is expected, it is possible to smoothly carry out the process by inhibiting the degraded state.

On the other hand, in a case where a scrollable screen is not displayed, the process is carried out in the second state. In a case where a process is not expected which requires a change of a scroll state of the screen, i.e., not so high workload is expected, it is possible to suppress power consumption and the like by maintaining the degraded state.

This allows a smooth scrolling process by efficiently carrying out the degraded operation in a scrolling process on a scrollable screen. It is therefore possible to prevent a deterioration in operational feeling for a user, which is caused by "slowness" or the like of the screen.

According to the screen display device of the present invention, it is preferable that the operation input is an operation input for an instruction to start scrolling a screen.

At the beginning of scrolling the screen, a load becomes higher than a state of a still screen. According to the configuration, in a case where an operation input is accepted which causes a high load, it is possible to heighten the processing capability of the device by inhibiting a so-called degraded operation.

According to the screen display device of the present invention, it is preferable that image pregenerating means for pregenerating, when a screen is scrolled, a screen to be displayed after scrolling; and the predetermined time period being determined with reference to a time period that is needed to generate the screen to be displayed after scrolling.

When the screen is scrolled, a process occurs for generating in advance a screen to be displayed after scrolling. Such a process is also called "buffer process". In the buffer process, a load becomes high.

According to the configuration, the predetermined time period, during which the degraded operation is inhibited, is determined with reference to a time period that is needed to carry out the buffer process. This makes it possible to set a processing capability of the device to be high during a time period in which a high load process is carried out.

According to the screen display device of the present invention, it is preferable that the screen display device further includes a touch panel which is integrated with the display section, the operation accepting means accepting an operation input on the touch panel.

According to the configuration, it is possible to heighten the processing capability of the device by inhibiting the degraded operation in response to an operation input on the touch panel.

This allows a smooth scrolling process by efficiently carrying out the degraded operation in a scrolling process on a scrollable screen.

As a result, it is possible to improve following performance and response of the scrolling process with respect to an operation input on the touch panel. In other words, it is possible to reduce "slowness" and the like in the scrolling process.

According to the screen display device of the present invention, it is preferable that the operation input is an operation input for an instruction to start an inertial scrolling of a screen in a predetermined direction; and a speed reduction process for reducing a scrolling speed is carried out in the inertial scrolling in response to the operation input.

The inertial scrolling of the screen in the predetermined direction indicates a scroll type in which a scrolling state is maintained by an immediately preceding operation input for scrolling. In the inertial scrolling, for example, the scrolling state is maintained and the scrolling speed is reduced in response to a flick input or the like.

According to the configuration, it is possible to carry out the speed reduction process for reducing the scrolling speed of the inertial scrolling while the processing capability of the device is heightened by inhibiting the degraded operation in response to the operation input. This makes it possible to smoothly carry out the inertial scrolling process.

According to the screen display device of the present invention, it is preferable that the operation input is an operation input for an instruction to scroll a screen in accordance with a location of the operation input on the touch panel; the screen display device further includes movement judging means for judging whether or not the location of the operation input on the touch panel has been moved by a predetermined distance within a predetermined time period; the state control means inhibits the switching from the first state to the second state further in accordance with a judgment result obtained by the movement judging means.

In a case where the location of the operation input on the touch panel has been moved by the predetermined distance within the predetermined time period, it can be expected that a flick operation for instructing an inertial scrolling is likely to be carried out.

According to the configuration, in a case where it is expected that an operation input will be carried out for an instruction to start inertial scrolling of a screen in a predetermined direction, it is possible to heighten the processing capability of the device in advance. This allows a smooth inertial scrolling process.

According to the screen display device of the present invention, it is preferable that the movement judging means judges whether or not the location of the operation input is at an edge part of the display area of the display section.

In a case where the location of the operation input on the touch panel has been moved by the predetermined distance within the predetermined time period and the location is at the edge part of the display area of the display section, it can be expected that a flick operation is more likely to be carried out. According to the configuration, it is possible to improve accuracy in expectation.

Note that the screen display device can be realized by a computer. In such a case, the present invention encompasses (i) a program which causes the computer to serve as each of the means of the screen display device and (ii) a computer-readable storage medium in which the program is stored.

Alternatively, the program can be realized as an application function for sending a request to a control system of the screen display device under the following conditions (1) and (2). The control system controls a switching between a first state, in which a process is carried out at a predetermined capability, and a second state in which the process is carried out at a capability which varies depending on workloads.
(1) In a case where a scrollable screen is being displayed when an operation input is accepted, the application function requests an operation in the first state.
(2) In a case where a scrollable screen is not being displayed when an operation input is accepted, the application function requests an operation in the second state.

The present invention is not limited to the aforementioned embodiments and is susceptible of various changes within the scope of the accompanying claims. That is, embodiments obtained by suitable combinations of technical means modified within the scope of the accompanying claims are also included within the technical scope of the present invention.

### Industrial Applicability

The present invention can be applied to devices such as a smart phone, a tablet terminal, a laptop personal computer, and other screen display devices.

### Reference Signs List

- 1:: Mobile terminal (screen display device)
- 10:: Control section
- 101:: Operation judging section (operation accepting means)
- 102:: Screen judging section (screen judging means)
- 103:: Inhibit instruction section (state control means)
- 104:: Degraded operation setting section (state control means)
- 105:: Scroll processing section (image pregenerating means)
- 106:: Elapsed time judging section (state control means)
- 107:: Termination instruction section (state control means)
- 108:: Movement judging section (movement judging means)
- 35:: Touch panel display section
- 35A:: Operation section
- 35B:: Display section
- 50:: Storage section
- 51:: Buffer memory

## Claims

1. A screen display device for displaying a scrollable display image which is larger than a display area of a display section, said screen display device comprising:
screen judging means for judging whether or not a screen displayed on the display section is scrollable;
operation accepting means for accepting, from a user, an operation input for changing a scroll state of the screen; and
state control means for controlling a state of said screen display device,
in a case where a scrollable screen is being displayed when the operation input is accepted, the state control means inhibiting, for a predetermined time period, a switching from a first state, in which a process is carried out at a predetermined capability, to a second state in which the process is carried out at a capability which varies depending on workloads, and
in a case where a scrollable screen is not displayed, the state control means causing a process to be carried out in the second state.

2. The screen display device as set forth in claim 1, wherein the operation input is an operation input for an instruction to start scrolling a screen.

3. The screen display device as set forth in claim 2, wherein:
image pregenerating means for pregenerating, when a screen is scrolled, a screen to be displayed after scrolling;
the predetermined time period being determined with reference to a time period that is needed to generate the screen to be displayed after scrolling.

4. A screen display device as set forth in any one of claims 1 through 3, further comprising:
a touch panel which is integrated with the display section,
the operation accepting means accepting an operation input on the touch panel.

5. The screen display device as set forth in claim 4, wherein:
the operation input is an operation input for an instruction to start an inertial scrolling of a screen in a predetermined direction; and
a speed reduction process for reducing a scrolling speed is carried out in the inertial scrolling in response to the operation input.

6. The screen display device as set forth in claim 5, wherein:
the operation input is an operation input for an instruction to scroll a screen in accordance with a location of the operation input on the touch panel;
said screen display device further comprises movement judging means for judging whether or not the location of the operation input on the touch panel has been moved by a predetermined distance within a predetermined time period;
the state control means inhibits the switching from the first state to the second state further in accordance with a judgment result obtained by the movement judging means.

7. The screen display device as set forth in claim 6, wherein:
the movement judging means judges whether or not the location of the operation input is at an edge part of the display area of the display section.

8. A method for controlling a screen display device for displaying a scrollable display image which is larger than a display area of a display section, said method comprising the steps of:
(a) judging whether or not a screen displayed on the display section is scrollable;
(b) accepting, from a user, an operation input for changing a scroll state of the screen; and
(c) controlling a state of the screen display device such that, in a case where a scrollable screen is being displayed when the operation input is accepted, a switching from a first state, in which a process is carried out at a predetermined capability, to a second state, in which the process is carried out at a capability that varies depending on workloads, is inhibited for a predetermined time period and, in a case where a scrollable screen is not displayed, a process is carried out in the second state.

9. A program for controlling a screen display device for displaying a scrollable display image which is larger than a display area of a display section, said program causing a computer to carry out a process that comprises the steps of:
(a) judging whether or not a screen displayed on the display section is scrollable;
(b) accepting, from a user, an operation input for changing a scroll state of the screen; and
(c) requesting a control system to control a state of the screen display device,
in the step (c),
in a case where a scrollable screen is being displayed when the operation input is accepted, the control system being requested to inhibit, for a predetermined time period, a switching from a first state, in which a process is carried out at a predetermined capability, to a second state in which the process is carried out at a capability which varies depending on workloads, and
in a case where a scrollable screen is not displayed, the control system being requested to carry out a process in the second state.

10. A program for operating a screen display device recited in any one of claims 1 through 7, said program causing a colmputer to serve as the means of the screen display device.

11. A computer-readable storage medium in which a program recited in claim 9 or 10 is stored.
